# EUROPÄISCHE PATENTSCHRIFT

(11) **EP 3 436 535 B1**
(45) Veröffentlichungstag und Bekanntmachung des Hinweises auf die Patenterteilung: **30.03.2022**
(21) Anmeldenummer: 17706749.3
(22) Anmeldetag: 22.02.2017
(51) Int. Cl.: C09D 161/06, C10M 169/04, C10M 145/24, C10M 111/04

(54) **GLEITLACK FÜR DIE BESCHICHTUNG VON MOTORKOLBEN**
ANTI-FRICTION LUBRICANT FOR COATING ENGINE PISTONS
VERNIS DE GLISSEMENT POUR LE REVÊTEMENT DE PISTONS POUR MOTEUR

(30) Priorität: 30.03.2016 DE 102016205199
(43) Veröffentlichungstag der Anmeldung: 06.02.2019
(73) Patentinhaber: Federal-Mogul Nürnberg GmbH, 90441 Nürnberg (DE); Reicolor Chemie-GmbH Chemische- U. Lackfabrik, 90518 Altdorf b. Nürnberg (DE)
(72) Erfinder: LEITZMANN, Dominik, 90513 Weiherhof (DE); BLÜMM, Monika, 90537 Feucht (DE); FUHRMANN, Thomas, 91207 Lauf/Peg. (DE); DANNENFELDT, Margrit, 90480 Nürnberg (DE); ADAM, Achim, 64569 Nauheim (DE); REITENSPIESS, Jürgen, 90518 Altdorf (DE)
(74) Vertreter: Hoffmann Eitle
(86) Internationale Anmeldenummer: PCT/EP2017/054011
(87) Internationale Veröffentlichungsnummer: WO 2017/167505

(56) Entgegenhaltungen:
- DE-A1-102009 002 716
- US-A1- 2013 220 115

## Beschreibung

### Technisches Gebiet

Die Erfindung betrifft einen Kolben für einen Verbrennungsmotor, bei dem der Kolbenschaft beschichtet ist.

### Stand der Technik

Zur Verringerung von CO₂-Emissionen von Kraftfahrzeugen ist es u.a. notwendig, die Energieverluste im Antriebsstrang zu reduzieren. Ein beträchtlicher Teil der Energieverluste wird durch die Reibung zwischen Kolbenschaft und Zylinder verursacht.

Daher müssen Beschichtungen für den Kolbenschaft einen niedrigen Reibungskoeffizienten aufweisen. Um eine ausreichende Lebensdauer der Beschichtung zu gewährleiten, muss die Beschichtung gleichzeitig eine hohe Verschleißbeständigkeit besitzen. Insbesondere wird eine hohe Widerstandsfähigkeit bzw. Verschleißbeständigkeit bei Motorbetriebszuständen mit hohem Verschleiß, wie z.B. bei wiederholten Kaltstarts, gefordert. Dabei soll vor allem das Durchlaufen der Beschichtung in den lasttragenden Bereichen des Kolbenschaftes vermieden werden.

Im Stand der Technik sind verschiedene Kolbenbeschichtungen bekannt, die zu diesem Zweck eingesetzt werden können.

Zum Beispiel wird in DE 10 2010 047 279 A1 eine Kolbenbeschichtung aus einer reibungsarmen äußeren Einlaufschicht und einer verschleißarmen inneren Schicht beschrieben. Die innere Schicht besteht aus einer Polymermatrix, in die Keramikpartikel, Aramidfasern und/oder Kohlenstofffasern eingebettet sind, und die äußere Schicht besteht aus einer Polymermatrix, in der Festschmierstoffpartikel dispergiert sind.

Bei der in DE 10 2009 002 716 A1 beschriebenen Beschichtung werden Festschmierstoffpartikel und Carbonfasern in einer Matrix auf Basis von Phenolharz eingesetzt.

DE 10 2008 055 194 A1 offenbart ein Gleitelement mit einem Substrat, auf das mindestens eine Gleitschicht aufgebracht ist. Bei dieser Gleitschicht handelt es sich um einen Gleitlack, der ein vernetzbares Bindemittel, ein hochschmelzendes Thermoplast oder ein Duroplast als Matrix umfasst. Diese Matrix enthält Fe₂O₃.

### Darstellung der Erfindung

Der Erfindung liegt die Aufgabe zugrunde eine Beschichtungszusammensetzung für einen Kolben bereitzustellen, die den bekannten Beschichtungen überlegen und für den Einsatz auf dem Kolbenschaft optimiert ist. Insbesondere soll eine Beschichtungszusammensetzung bereitgestellt werden, die sich durch einfache Herstellbarkeit, gute Aufbringbarkeit mittels Druckverfahren und gute Reibungs- und Verschleißeigenschaften auszeichnet.

Diese Aufgabe wird dadurch gelöst, dass eine Zusammensetzung, die, basierend auf der Gesamtzusammensetzung:
a) 10-30 Gew.-% Phenolharz;
b) 10-30 Gew.-% Epoxidharz;
c) 10-30 Gew.-% zumindest eines Festschmierstoffs ausgewählt aus der Gruppe bestehend aus Graphit, MoS2, WS2, und BN; und
d) 5-30 Gew.-% Fe2O3-Partikel
umfasst, für die Beschichtung des Kolbenschafts verwendet wird.

Es hat sich überraschend gezeigt, dass die erfindungsgemäß verwendete Zusammensetzung zu einer Beschichtung führt, deren Eigenschaften, wie z.B. Flexibilität, Haftung, Verschleißbeständigkeit und Reibungskoeffizient, optimal an die Bedingungen am Kolben angepasst sind. Die erfindungsgemäße Zusammensetzung lässt sich ferner einfach und kostengünstig herstellen sowie gut mittels Druckverfahren auf den Kolben auftragen. Diese Eigenschaften werden durch den Einsatz der Bestandteile (Phenolharz, Epoxidharz, Festschmierstoff und Fe₂O₃) in bestimmten Mengen erzielt. So führt z.B. ein niedrigerer Fe₂O₃-Gehalt zu einer Verschlechterung der Eigenschaften, wie einer geringeren Verschleißbeständigkeit.

Die erfindungsgemäß verwendete Zusammensetzung umfasst als Matrixmaterial ein, bevorzugt thermisch härtbares, Phenolharz. Thermisch härtbare Phenolharze, sogenannte Resole, können im Gegensatz zu den Novolacken über Hydroxylgruppen vernetzen. Bevorzugt werden Phenolharze mit einem mittleren Molekulargewicht von 500-1500 g/mol eingesetzt.

Als weiteres Matrixmaterial umfasst die erfindungsgemäß verwendete Zusammensetzung ein Epoxidharz. Der Zusatz des Epoxidharzes verbessert die Haftung der Schichten auf metallischen Oberflächen sowie deren Flexibilität. Zu diesem Zweck wird bevorzugt ein Epoxidharz auf Basis von Bisphenol A mit einem Molekulargewicht von 2000-4000 g/mol und einem Epoxyäquivalent > 700 g/mol eingesetzt.

Im Rahmen der Erfindung werden diese Harze bevorzugt als Lösung in einem Lösungsmittel eingesetzt. Die Wahl des Lösungsmittels richtet sich im Wesentlichen nach der Art der Lackapplikation und hat keinen Einfluss auf die Eigenschaften der ausgehärteten Beschichtung. Die Beschichtung von Kolben wird häufig im Siebdruckverfahren durchgeführt. Für diese Anwendung sind insbesondere Lösungsmittel mit hohem Siedepunkt bevorzugt. Geeignete Lösungsmittel sind z.B. Butylglykolacetat, Ethylglycolacetat, Dipropylenglycol, Dipropylenglycolbutylether, Butoxyethanol.

Das Phenolharz und/oder das Epoxidharz kann alternativ auch als wasserverdünnbare Dispersion eingesetzt werden. Die eingesetzten Polymerdispersionen können im Rahmen der Erfindung in reinem Wasser oder Wasser-Lösungsmittelgemischen verdünnt vorliegen. Als Co-Lösungsmittel kommen z.B. Butylglycol, Propylenglycol, Dipropylenglycol-n-butylether oder auch Testbenzin in Frage. Dabei beträgt das Verhältnis Wasser/Lösungsmittel bevorzugt 1:2 oder mehr, besonders bevorzugt 1:1 oder mehr.

Sowohl das Phenolharz als auch das Epoxidharz wird in einer Menge von 10-30 Gew.-% basierend auf der Gesamtzusammensetzung eingesetzt.

In einer besonders bevorzugten Ausführungsform enthält die erfindungsgemäß verwendete Zusammensetzung Phenolharz und Epoxidharz in einem Verhältnis 1:3 bis 3:1.

Als Festschmierstoff(e) werden der Zusammensetzung Graphit, MoS₂, WS₂, BN oder Mischungen davon zugesetzt. Bevorzugt wird eine Mischung aus Graphit und MoS₂ eingesetzt. Dabei können dem Fachmann als Festschmierstoff geläufige Qualitäten eingesetzt werden. Bevorzugt wird Graphit mit einer mittleren Korngröße von 1-100 µm, besonders bevorzugt von 5-50 µm eingesetzt. Molybdändisulfid wird bevorzugt mit einer mittleren Korngröße von 0,1-50 µm, besonders bevorzugt von 0,1-10 µm eingesetzt. Bornitrid in der hexagonalen Modifikation wird bevorzugt mit einer mittleren Korngröße im Bereich von 1-100 µm, besonders bevorzugt im Bereich von 1-20 µm eingesetzt.

Die Korngröße der o.g. Festschmierstoffe kann mittels Streulichtverfahren auf eine dem Fachmann bekannte Weise gemessen werden.

Der Festschmierstoff bzw. die Festschmierstoffmischung wird in einer Menge von 10-30 Gew.-%, bevorzugt 15-20 Gew.-%, basierend auf der Gesamtzusammensetzung eingesetzt.

Als weitere Komponente enthält die erfindungsgemäß verwendete Zusammensetzung Fe₂O₃-Partikel in einer Menge von 5-30 Gew.-%, bevorzugt 10-15 Gew.-%.

Neben den oben genannten Komponenten kann die Zusammensetzung noch Additive und Hilfsstoffe enthalten wie z.B. Verlaufsadditive, Entschäumer, Netzmittel, Dispergierhilfsmittel oder auch Rheologieadditive. Solche Zusatzstoffe werden üblicherweise in Kolbenbeschichtungen eingesetzt und sind dem Fachmann bekannt.

Die erfindungsgemäß verwendete Beschichtungszusammensetzung kann für Aluminium- und Stahlkolben eingesetzt werden.

Das Aufbringen der Beschichtungszusammensetzung auf den Kolben kann durch bekannte Verfahren zur Aufbringung von Beschichtungen auf Oberflächen erfolgen. Bevorzugt kommen Siebdruck- oder Sprühverfahren zum Einsatz. Hierbei wird zunächst die noch nicht vernetzte Beschichtungszusammensetzung auf die zu beschichtende Oberfläche aufgetragen. Anschließend wird die Beschichtungszusammensetzung ausgehärtet bzw. vernetzt. Das Härten bzw. Vernetzen kann thermisch oder mittels Strahlung, beispielsweise durch UV- oder IR-Strahlung, erfolgen. Bevorzugt erfolgt es thermisch oder mittels IR-Strahlung.

Die einzelnen Bestandteile der erfindungsgemäß verwendeten Zusammensetzung wirken in vorteilhafter Weise zusammen, so dass die Flexibilität, die Haftung auf dem Kolben, die Verschleißbeständigkeit, der Reibungskoeffizient und die Aufbringbarkeit mittels Druckverfahren optimal an die Bedingungen am Kolben angepasst sind.

## Patentansprüche

1. Kolben für einen Verbrennungsmotor, der auf dem Kolbenschaft eine Beschichtung aus einer Zusammensetzung aufweist, die, basierend auf der Gesamtzusammensetzung:
a) 10-30 Gew.-% Phenolharz;
b) 10-30 Gew.-% Epoxidharz;
c) 10-30 Gew.-% zumindest eines Festschmierstoffs ausgewählt aus der Gruppe bestehend aus Graphit, MoS₂, WS₂, und BN; und
d) 5-30 Gew.-% Fe₂O₃-Partikel
umfasst.

2. Kolben gemäß Anspruch 1, wobei eine Festschmierstoffmischung aus Graphit und MoS₂ eingesetzt wird.

3. Kolben gemäß Anspruch 1 oder 2, wobei die Zusammensetzung ferner ein Lösungsmittel und Additive umfasst.

4. Kolben gemäß Anspruch 3, wobei die Zusammensetzung die Lösungsmittel und Additive in einer Menge von 20-60 Gew.-%, basierend auf der Gesamtzusammensetzung, umfasst.

5. Kolben gemäß einem der Ansprüche 1 bis 4, wobei die Zusammensetzung 15-20 Gew.-% Festschmierstoff(e) umfasst.

6. Kolben gemäß einem der Ansprüche 1 bis 5, wobei die Zusammensetzung 10-15 Gew.-% Fe₂O₃-Partikel umfasst.

7. Kolben gemäß einem der Ansprüche 1 bis 6, wobei das Verhältnis von Phenolharz zu Epoxidharz 1:3 bis 3:1 beträgt.

8. Verwendung der in einem der Ansprüche 1 bis 7 definierten Zusammensetzung zur Beschichtung des Kolbenschafts eines Kolbens für einen Verbrennungsmotor.

## Claims

1. Piston for an internal combustion engine, comprising on the piston shaft a coating consisting of a composition which, based on the total composition, comprises:
a) 10-30 wt.% phenol resin;
b) 10-30 wt.% epoxy resin;
c) 10-30 wt.% at least one solid lubricant selected from the group consisting of graphite, MoS₂, WS₂ and BN; and
d) 5-30 wt.% Fe₂O₃ particles.

2. Piston according to claim 1, wherein a solid lubricant mixture of graphite and MoS₂ is used.

3. Piston according to claim 1 or 2, wherein the composition further comprises a solvent and additives.

4. Piston according to claim 3, wherein the composition comprises the solvent and additives in an amount of 20-60 wt.%, based on the total composition.

5. Piston according to any of claims 1 to 4, wherein the composition comprises 15-20 wt.% solid lubricant(s).

6. Piston according to any of claims 1 to 5, wherein the composition comprises 10-15 wt.% Fe₂O₃ particles.

7. Piston according to any of claims 1 to 6, wherein the ratio of phenol resin to epoxy resin is 1:3 to 3:1.

8. Use of the composition defined in any of claims 1 to 7 for coating the piston shaft of a piston for an internal combustion engine.

## Revendications

1. Piston pour un moteur à combustion interne, qui présente sur la jupe de piston un revêtement d'une composition qui comprend, sur la base de la composition totale :
a) 10-30 % en poids de résine phénolique ;
b) 10-30 % en poids de résine époxy ;
c) 10-30 % en poids d'au moins un lubrifiant solide choisi dans le groupe consistant en graphite, MoS₂, WS₂, et BN ; et
d) 5-30 % en poids de particules de Fe₂O₃.

2. Piston selon la revendication 1, dans lequel un mélange de lubrifiants solides composé de graphite et de MoS₂ est utilisé.

3. Piston selon la revendication 1 ou 2, dans lequel la composition comprend en outre un solvant et des additifs.

4. Piston selon la revendication 3, dans lequel la composition comprend les solvants et les additifs en une quantité de 20 à 60 % en poids, sur la base de la composition totale.

5. Piston selon l'une quelconque des revendications 1 à 4, dans lequel la composition comprend 15 à 20 % en poids de lubrifiant(s) solide(s).

6. Piston selon l'une quelconque des revendications 1 à 5, dans lequel la composition comprend 10 à 15 % en poids de particules de Fe₂O₃.

7. Piston selon l'une quelconque des revendications 1 à 6, dans lequel le rapport de la résine phénolique sur la résine époxy est de 1:3 à 3:1.

8. Utilisation de la composition définie selon l'une quelconque des revendications 1 à 7 pour le revêtement de la jupe de piston d'un piston pour un moteur à combustion interne.
